# EUROPÄISCHE PATENTSCHRIFT

(11) **EP 1 708 344 B1**
(45) Veröffentlichungstag und Bekanntmachung des Hinweises auf die Patenterteilung: **29.04.2020**
(21) Anmeldenummer: 06006770.9
(22) Anmeldetag: 30.03.2006
(51) Int. Cl.: H02M 3/156, H02M 1/08

(54) **Schaltungsanordnung und Verfahren zum Regeln einer getakteten Stromversorgung**
Method and circuit arrangement for regulating a switch mode power supply
Procédé et dispositif pour réguler une alimentation de puissance à découpage

(30) Priorität: 01.04.2005 DE 202005005201 U
(43) Veröffentlichungstag der Anmeldung: 04.10.2006
(73) Patentinhaber: OSRAM GmbH, 80807 München (DE)
(72) Erfinder: Huber, Andreas, 82216 Maisach (DE); Reiter, Bernhard, 81541 München (DE)

(56) Entgegenhaltungen:
- EP-A1- 1 506 697
- US-A- 5 055 767
- US-A1- 2003 227 279

## Beschreibung

### Technisches Gebiet

Die Erfindung betrifft eine Schaltungsanordnung zum Regeln einer getakteten Stromversorgung. Weiterhin betrifft die Erfindung ein Verfahren zum Regeln einer getakteten Stromversorgung.

### Stand der Technik

Getaktete Stromversorgungen sind allgemein bekannt. Sie dienen dazu eine bereitgestellte elektrische Energie an die Anforderungen einer Last anzupassen. Dabei geht es beispielsweise um die Anpassung des Spannungsniveaus oder um die Bereitstellung einer geregelten Spannungs- oder Stromquelle. Getaktete Stromversorgungen bestehen im wesentlichen aus mindestens einem elektronischen Schalter und Energiespeichem wie Drosseln und Kondensatoren.

Weit verbreitet ist der sog. Buck-Konverter auf dessen Grundlage stellvertretend für andere Konverter die vorliegende Erfindung dargestellt wird. Buck-Konverter dienen meist zur Bereitstellung einer Spannungsquelle, die eine Spannung aufweist, die niedriger ist als die Spannung der speisenden Quelle. Buck-Converter werden aber auch eingesetzt, um aus einer Spannungsquelle eine Last zu bedienen, die einen konstanten Strom oder eine konstante Leistung benötigt. Dies ist bei Entladungs-Lampen der Fall. Insbesondere Hochdruck-Entladungslampen werden meist von einem Buck-Konverter gespeist.

In der Schrift US 5 055 767 (Nelson) ist die Regelung eines Schaltwandlers beschrieben. Bei Änderungen der Eingangsspannung werden Spannungsänderungen in der Regelschleife mit Hilfe eines analogen Multiplizieres vermieden.

In der Schrift US 2003/0227279A1 (Feldtkeller) ist ein Schaltwandler beschrieben, dessen Regelung abhängig vom Eingangsstrom und der Ausgangsspannung ist. Dazu wird die Steigung eines Rampensignals verändert.

In der Schrift EP1506697A1 (Riederer) ist ein Schaltwandler beschrieben, der eine Regelung aufweist, mit der eine bestimmte Steigung des Stromverlaufs für eine Lampe erzeugt werden kann.

Der Buck-Konverter weist einen elektronischen Schalter auf, der für die Dauer einer Ein-Zeit eingeschaltet bzw. geschlossen ist und für die Dauer einer Aus-Zeit ausgeschaltet bzw. offen ist. Während der Ein-Zeit fließt Energie aus der speisenden Quelle auf eine Buck-Drossel. Während der Aus-Zeit fließt die in der Buck-Drossel gespeicherte Energie auf die Last. Das Verhältnis von Ein-Zeit zu Aus-Zeit definiert das sog. Tastverhältnis (engl.: Dutycycle) mit dem der Energiefluss und damit die Lastspannung oder der Laststrom geregelt werden kann. Es muss also eine Schaltungsanordnung zum Regeln der getakteten Stromversorgung, hier des Buck-Konverters, bereitgestellt werden, das ein Steuersignal zum Einschalten des elektronischen Schalters liefert, wobei das Tastverhältnis von einer Regelgröße abhängt.

Typische Anforderung an eine derartige Regelschaltung ist eine möglichst hohe Regelgeschwindigkeit, damit sich Lastwechsel an der geregelten Ausgangsgröße nicht bemerkbar machen. Eine möglichst hohe Regelgeschwindigkeit ist auch nötig, wenn die geregelte Ausgangsgröße einem gewünschten zeitlichen Verlauf möglichst fehlerfrei folgen soll. Dies gilt insbesondere für den Stromverlauf von Hochdruck-Entladungslampen in Projektionsanwendungen. Bei dieser Anwendung ist auch gefordert, dass Regelschwingungen möglichst gering sein sollen.

Im Stand der Technik ist zur Regelung einer getakteten Stromversorgung eine Schaltungsanordnung bekannt die im sog. "Average Current Mode" arbeitet. Das Steuersignal für den elektronischen Schalter wird dabei von einem Komparator erzeugt, der eine sägezahnförmige Spannung eines Sägezahngenerators mit einem Schwellwert vergleicht, der von der Regelgröße abhängt. Der Schwellwert wird von einem integrierenden Differenzverstärker bereit gestellt, der den Strom durch die Buck-Drossel erfasst. Als Referenzwert kann dem Differenzverstärker ein Stromsollwert vorgegeben werden. Dann arbeitet die getaktete Stromversorgung als Stromquelle, beispielsweise für eine Entladungslampe. Als Referenzwert kann dem Differenzverstärker auch die Ausgangsspannung der getakteten Stromversorgung vorgegeben werden. Dann arbeitet die getaktete Stromversorgung als Spannungsquelle.

Die Realisierung der Schaltungsanordnung zum Regeln der getakteten Stromversorgung gemäß dem beschriebenen Stand der Technik hat folgende Nachteile:
- Die Regelgeschwindigkeit kann nicht beliebig erhöht werden, da sonst die Stabilität der Regelung nicht mehr gewährleistet ist. Eine Erhöhung der Regelgeschwindigkeit, z. B. durch Erhöhung der sog. Kreisverstärkung, geht beim Stand der Technik immer zu Lasten der Stabilität und führt damit zu verstärkten Regelschwingungen.
- Beim Erreichen des Schwellwerts schaltet der elektronische Schalter nicht sofort, sondern bedingt durch unvermeidliche Reaktionszeiten erst nach einer gewissen Verzögerung. Die Änderung des Buck-Drosselstroms während dieser Verzögerung ist abhängig von der Steilheit, mit der sich der Buck-Drosselstrom ändert. Diese wiederum ist abhängig von der Spannung der speisenden Energiequelle. Bei unterschiedlichen Spannungen der speisenden Energiequelle kommt es somit zu unterschiedlichen Spitzenwerten für den Buck-Drosselstrom. Im Stand der Technik führen somit Variationen der Spannung der speisenden Energiequelle prinzipbedingt zu Variationen der Regelgröße. D. h. Variationen der Spannung der speisenden Energiequelle können nicht vollständig ausgeregelt werden. Eine bessere Ausregelung kann wiederum nur auf Kosten der Stabilität erfolgen.

### Darstellung der Erfindung

Es ist Aufgabe der vorliegenden Erfindung, eine Schaltungsanordnung zum Regeln einer getakteten Stromversorgung bereitzustellen, die die oben genannten Nachteile aus dem Stand der Technik vermeidet. D. h. die Erfindung bewerkstelligt eine Erhöhung der Regelgeschwindigkeit ohne Verstärkung der Regelschwingungen.

Es ist ein weiterer Aspekt der vorliegenden Erfindung eine Schaltungsanordnung zum Regeln einer getakteten Stromversorgung bereitzustellen, die einen vorteilhaften Einsatz eines Microcontrollers oder einer digitalen Logikeinheit ermöglicht.

Es ist ein weiterer Aspekt der vorliegenden Erfindung eine Schaltungsanordnung zum Regeln einer getakteten Stromversorgung bereitzustellen, die sowohl für den sog. "Continuous Mode", in dem der Buck-Drosselstrom nicht zu Null, wird geeignet ist, als auch für den sog. "Discontinuous Mode", bei dem der Buck-Drosselstrom zwischenzeitlich zu Null wird, geeignet ist.

Erfindungsgemäß wird die gestellte Aufgabe dadurch gelöst, dass die Schaltungsanordnung das Zeitintegral des Steuersignals für den elektronischen Schalter bildet und die Ein-Zeit beendet, falls dieses Zeitintegral größer wird als die gewichtete Regelgröße.

Vorteilhaft kann bei der erfindungsgemäßen Schaltungsanordnung der Sägezahngenerator eingespart werde. Vielmehr entsteht durch die Integration des Steuersignals eine sägezahn- oder dreieckförmige Spannung. Im Stand der Technik arbeitet der Sägezahngenerator unabhängig vom zeitlichen Verlauf des Buck-Drosselstroms. In der erfindungsgemäßen Schaltungsanordnung beginnt die durch die Integration des Steuersignals erzeugte sägezahn- oder dreieckförmige Spannung genau dann zu steigen, wenn auch der Buck-Drosselstrom zu steigen beginnt. Damit ist die sägezahn- oder dreieckförmige Spannung mit dem Buck-Drosselstrom synchronisiert. Diese erfindungsgemäße Synchronisierung kann äquivalent zur beschrieben Lösung auch dadurch geschehen, dass der Sägezahngenerator aus dem Stand der Technik durch das Steuersignal getriggert wird.

Die erfindungsgemäße Synchronisierung bewirkt eine Erhöhung der Regelgeschwindigkeit ohne Erhöhung der Kreisverstärkung und damit ohne Erhöhung von Regelschwingungen.

Wenn das Zeitintegral des Steuersignals die gewichtete Regelgröße übersteigt, endet die Ein-Zeit und es beginnt die Aus-Zeit in der der elektronische Schalter ausgeschaltet ist. Die Dauer der Aus-Zeit wird vorteilhaft durch zwei Einrichtungen bestimmt. Zum einen durch einen Off-Timer und zum anderen durch einen Detektor, der den Stromnulldurchgang in einer Drossel, wie z. B. der Buck-Drossel erfasst. Beide Einrichtungen können einzeln oder auch kombiniert eingesetzt werden.

Der Off-Timer ist besonders für den "Continuous Mode" geeignet. Durch den Off-Timer wird die Zeit begrenzt in der der Strom in der Drossel nach dem abschalten des elektronischen Schalters sinkt. Der Off-Timer ist Bestandteil der Steuereinheit und wird vorteilhaft durch einen Microcontroller realisiert. Sobald die Ein-Zeit zu Ende ist, startet die Steuereinheit den Off-Timer. Durch den Microcontroller kann die maximale Aus-Zeit, die der Off-Timer vorgibt flexibel programmiert werden und sogar im laufenden Betrieb geändert werden.

Der Detektor ist besonders für den "Discontinuous Mode" geeignet. Durch den Detektor stellt sich die Aus-Zeit automatisch so ein, dass die Steuereinheit den elektronische Schalter dann wieder eingeschaltet, wenn der Drosselstrom, z. B. der Buck-Drosselstrom Null wird. Der Detektor muss nicht zwingend exakt den Strom "Null" detektieren; er kann zum Ausgleich von Laufzeiten auch bereits bei Strömen ansprechen, die oberhalb oder unterhalb von "Null" sind.

Enthält die Schaltungsanordnung sowohl einen Detektor als auch einen Off-Timer, so kann die getaktete Stromversorgung sowohl im "Discontinuous Mode" als auch im "Continuous Mode" arbeiten. Ist die maximale Aus-Zeit abgelaufen, bevor der Drosselstrom zu Null wird, so arbeitet die getaktete Stromversorgung im "Continuous Mode". Wird der Drosselstrom Null bevor die maximale Aus-Zeit abgelaufen ist, so arbeitet die getaktete Stromversorgung im "Discontinuous Mode". Ein Microcontroller kann durch Einstellen der maximalen Aus-Zeit über den Off-Timer auch während des Betriebs zwischen den Moden wechseln. Die Struktur der offenbarten Schaltungsanordnung ermöglicht dies ist mit sowohl geringem Hardware- als auch geringem Software-Aufwand.

Die Ein-Zeit begrenzt gemäß der obigen Beschreibung die Steuereinheit dadurch, dass sie den elektronische Schalter über das Steuersignal ausschaltet, wenn das Zeitintegral des Steuersignals die gewichtete Regelgröße übersteigt. In manchen Fällen kann es sinnvoll sein, nicht so lange abzuwarten, bis dieser Fall eintritt, sondern die Ein-Zeit vorzeitig abzubrechen. Dies kann z.B. nötig sein, wenn eine bestimmte Schwingfrequenz der getakteten Stromversorgung gewünscht ist oder der Drosselstrom nach oben begrenzt sein soll. Vorteilhaft wird dies gelöst durch einen On-Timer, der zu Beginn der Ein-Zeit startet und nach Ablauf einer durch den On-Timer vorgegebenen maximalen Ein-Zeit die Ein-Zeit abbricht. Ähnlich dem Off-Timer wird der On-Timer bevorzugt auch durch einen Microcontroller realisiert. Die maximale Ein-Zeit kann damit flexibel programmiert und auch während des Betriebs geändert werden.

Die gewichtete Regelgröße mit der das Zeitintegral des Steuersignals verglichen wird ist im wesentlichen ein Signal das proportional zum Drosselstrom ist und durch einen Regelverstärker verstärkt wurde. Der Regelverstärker ist als Differenzverstärker ausgebildet. Über eine Rückkopplung erhält der Differenzverstärker einen integrierenden Anteil. Der Differenzverstärker bildet die Differenz der Istgröße "Drosselstrom" und einer Sollgröße. Vorteilhaft gibt ein Microcontroller den Wert der Sollgröße vor. Dann ist es möglich die Sollgröße abhängig von Ausgangsgrößen der getakteten Stromversorgung im Microcontroller zu berechnen. Dies erlaubt beispielsweise die Realisierung einer Leistungsregelung, wie sie beim Betrieb von Hochdruck-Entladungslampen nötig ist. Die offenbarte Struktur der Schaltungsanordnung erlaubt eine ökonomische Aufteilung der Funktionen auf Microcontroller und analoge Baueinheiten. Der Differenzverstärker und der Komparator, die beide bezüglich der Geschwindigkeit kritische Funktionen erfüllen, werden analog realisiert. Rechenaufwendige Funktionen und Funktionen, die flexibel programmierbar sein sollen übernimmt der Microcontroller. Darunter fallen die Timerfunktionen und die Berechnung eines Sollwerts. An Stelle des Microcontrollers kann äquivalent auch eine digitale Logikschaltung verwendet werden. Beispielsweise können sog. Gate-Arrays oder FPGA Verwendung finden.

Mit Hilfe der Software in einem Microcontroller kann ein erfindungsgemäßes Verfahren zum Regeln einer getakteten Stromversorgung mit einem elektronischen Schalter (S1) realisiert werden, das durch folgende Schritte gekennzeichnet ist:
- Einschalten des elektronischen Schalters (S1) mit einem Steuersignal und starten des ON-Timers
- Bereitstellen des Zeitintegrals des Steuersignals
- Bereitstellen einer gewichteten Regelgröße
- Bereitstellen einer Differenzgröße gebildet aus der Differenz von Zeitintegral des Steuersignals und gewichteter Regelgröße
- Falls die Differenzgröße einen Schwellwert erreicht, beispielsweise Null, wird der ON-Timer rückgesetzt, der elektronische Schalter ausgeschaltet und der OFF-Timer gestartet

Dieses Verfahren kann dadurch gekennzeichnet sein, dass die getaktete Stromversorgung eine Drossel (L1) umfasst und dann, wenn der Strom durch die Drossel (L1) einen vorgegebenen Grenzwert, beispielsweise Null, unterschreitet, der OFF-Timer rückgesetzt, der elektronische Schalter (S1) eingeschaltet und der ON-Timer gestartet wird.

### Kurze Beschreibung der Zeichnungen

Im folgenden soll die Erfindung anhand eines Ausführungsbeispiels unter Bezugnahme auf Zeichnungen näher erläutert werden. Es zeigen:
- Figur 1: ein Ausführungsbeispiel einer erfindungsgemäßen Schaltungsanordnung,
- Figur 2: typische Zeitverläufe von Strömen und Spannungen in einer erfindungsgemäßen Schaltungsanordnung im "Discontinuous Mode",
- Figur 3: typische Zeitverläufe von Strömen und Spannungen in einer erfindungsgemäßen Schaltungsanordnung im "Continuous Mode".

Im folgenden werden Widerstände durch den Buchstaben R, Schalter durch den Buchstaben S, Dioden durch den Buchstaben D, Kondensatoren durch den Buchstaben C, Knoten durch den Buchstaben N, Anschlüsse durch den Buchstaben J und Drosseln durch den Buchstaben L jeweils gefolgt von einer Zahl bezeichnet.

### Bevorzugte Ausführung der Erfindung

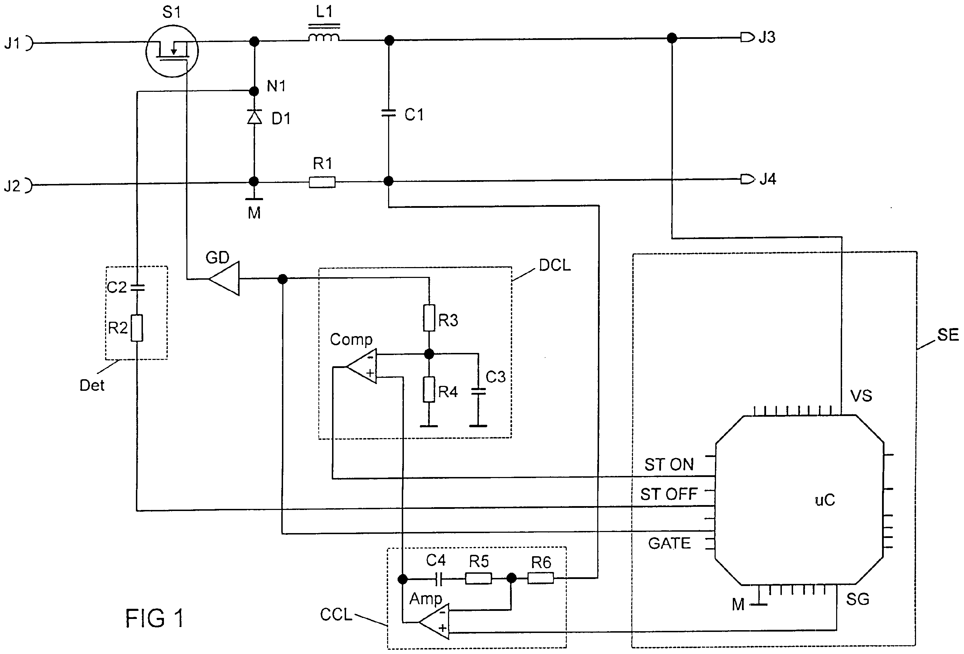

Figur 1 zeigt ein Ausführungsbeispiel einer erfindungsgemäßen Schaltungsanordnung mit einem Buck-Converter. An den Anschlussklemmen J1 und J2 ist eine speisende Energiequelle anschließbar. Dabei kann es sich beispielsweise um eine sog. "Power Factor Control" Stufe handeln.

An den Anschlüssen J3 und J4 stellt der Buck-Converter für eine Last eine geregelte Spannung, einen geregelten Strom oder eine geregelte Leistung zur Verfügung, abhängig von der Programmierung eines Microcontrollers uC. Beispielsweise kann die Last eine Entladungslampe sein.

Der Buck-Converter wird in bekannter Weise von einem elektronischen Schalter S1, einer Diode D1, einer Buck-Drossel L1 und einem Speicherkondensator C1.

S1 und L1 sind über einen Knoten N1 als Serienschaltung zwischen J1 und J3 geschaltet. S1 ist in Figur 1 als MOSFET ausgeführt. Andere elektronische Schalter wie IGBT oder Bipolartransistor können auch eingesetzt werden. J2 ist mit einem Massepotenzial M verbunden. Zwischen N1 und dem Massepotenzial M ist die Diode D1 geschaltet. Zwischen J3 und J4 ist der Speicherkondensator C1 geschaltet. Zwischen das Massepotenzial M und J4 ist ein Messwiderstand R1 geschaltet. Damit kann an J4 ein massebezogenes Signal abgegriffen werden, das proportional zum Drosselstrom durch L1 ist.

Dieses Signal ist verbunden mit dem invertierenden Eingang eines Regelverstärkers CCL. Dieser ist aufgebaut aus einem Differenzverstärker Amp dessen Ausgang über eine Serienschaltung aus einem Kondensator C4 und einem Widerstand R5 mit dem invertierenden Eingang des Differenzverstärker Amp verbunden ist. Der invertierenden Eingang des Differenzverstärker Amp ist über einen Widerstand R6 mit dem invertierenden Eingang des Regelverstärkers CCL verbunden. Der nicht invertierende Eingang des Differenzverstärker Amp bildet den nicht invertierende Eingang des Regelverstärkers CCL und ist mit einem Ausgang SG eines Microcontrollers uC in einer Steuereinheit SE verbunden. Durch die Gegenkopplung C4, R5 wirkt der Regelverstärkers CCL als integrierender Verstärker für das Strommesssignal, das der Messwiderstand R1 liefert. Gleichzeitig gibt der Microcontroller uC über seinen Ausgang SG eine Sollgröße vor, die dem Ausgang des Regelverstärkers CCL additiv überlagert wird.

Der Ausgang des Regelverstärkers CCL ist mit dem nicht invertierenden Eingang eines Komparators Comp verbunden.

Der Microcontroller uC liefert an seinem Ausgang GATE ein Steuersignal zum Steuern des elektronischen Schalters S1. Das Steuersignal ist über einen Treiberverstärker GD dem Gateanschluss von S1 zugeführt. Das Steuersignal ist über einen Widerstand R3 mit dem invertierenden Eingang des Komparators Comp verbunden. Dieser ist über die Parallelschaltung eines Widerstands R4 und eines Kondensators C3 mit dem Massepotenzial M verbunden. Der Ausgang des Komparators Comp ist mit einem Eingang STON des Microcontrollers uC Verbunden. Der Komparator Comp, R3, R4 und C3 bilden einen Duty-Cycle-Steuerung DCL.

Der Microcontroller uC besitzt einen weiteren Eingang STOFF, der über eine Detektor Det mit dem Knoten N1 verbunden ist. Der Detektor Det besteht aus der Serienschaltung eines Kondensators C2 und eines Widerstands R2.

Der Microcontroller uC besitzt einen weiteren Eingang VS der mit der Ausgangsklemme J3 gekoppelt ist.

Im folgenden wird die Funktionsweise des Ausführungsbeispiels gemäß Figur 1 erläutert:
Der Microcontroller uC schaltet zum Beginn der Ein-Zeit über seinen Ausgang GATE den elektronischen Schalter S1 ein. Gleichzeitig startet er seinen internen ON-Timer in dem die maximale Ein-Zeit abgelegt ist. Falls der Eingang STON inaktiv bleibt, wird die maximale Ein-Zeit erreicht. Der Microcontroller uC schaltet dann S1 ab und startet seinen internen OFF-Timer, in dem die maximale Aus-Zeit abgelegt ist. Falls der Eingang STOFF inaktiv bleibt, wird die maximale Aus-Zeit erreicht. Der Microcontroller uC schaltet dann S1 wieder ein und der beschriebene Zyklus beginnt erneut. Die maximale Ein-Zeit und die maximale Aus-Zeit werden von der Software des Microcontrollers eingestellt und können abhängig von der am Eingang VS messbaren Ausgangsspannung der getakteten Stromversorgung gewählt werden. Damit lässt sich eine geregelte Spannungsquelle realisieren, wobei die getakteten Stromversorgung nicht im sog. "Current Mode" arbeitet.

Der oben beschriebene Zyklus läuft nur dann in dieser Form ab, wenn der Microcontroller maximale Ein- und Aus-Zeiten einstellt, die so kurz sind, dass sie ablaufen, bevor die Duty-Cycle-Steuerung DCL oder der Detektor Det aktiv werden.

Bei längerer maximaler Ein-Zeit geschieht folgendes: Das Steuersignal wird im Kondensator C3 über die Zeit integriert. Die Spannung an C3 steigt somit linear an. Sobald diese Spannung größer wird als die Spannung die der Regelverstärker CCL liefert, gibt die Duty-Cycle-Steuerung DCL ein Signal an den Eingang STON des Microcontrollers. Dieser bricht daraufhin die Ein-Zeit ab, schaltet S1 ab und startet den OFF-Timer. Da der Ausgang des Regelverstärkers vom Drosselstroms abhängt, bestimmt somit der Drosselstrom den Abschaltmoment von S1, wodurch ein "Current Mode" realisiert wird.

Im vorliegenden Ausführungsbeispiel steigt während der Ein-Zeit die Spannung an C3 und die Spannung am Ausgang des Regelverstärkers CCL sink. Sie sinkt deshalb, weil der Drosselstrom steigt und der Regelverstärkers CCL für den Drosselstrom invertierend arbeitet. Äquivalent dazu könnte der Regelverstärkers CCL für den Drosselstrom auch nicht invertierend arbeiten. Dann müsste allerdings ein invertiertes Steuersignal aufintegriert und in einem Komparator mit dem Ausgang des Regelverstärkers CCL verglichen werden. Entscheidend ist nur, dass die zu vergleichenden Signale Steigungen mit entgegengesetztem Vorzeichen haben.

Im vorliegenden Ausführungsbeispiel ist der Ausgang des Regelverstärkers CCL mit dem nicht invertierenden Eingang des Komparators Comp verbunden und der integrierende Kondensator C3 speist seine Spannung auf den invertierenden Eingang. Sobald die Spannung an C3 die Ausgangsspannung des Regelverstärkers CCL überschreitet, entsteht am Ausgang des Komparators Comp eine negative Flanke. Der Microcontroller ist so ausgelegt, dass er diese negative Flanke als aktives Signal der Duty-Cycle-Steuerung DCL erkennt. Äquivalent dazu könnten die Eingänge des Komparators Comp auch vertauscht sein. Dann müsste der Microcontroller auf eine positive Flanke reagieren.

Am nicht invertierenden Eingang des Regelverstärkers speist im Ausführungsbeispiel der Microcontroller ein Sollsignal ein. Wird das Sollsignal größer, so ist das Ausgangssignal des Regelverstärkers CCL angehoben. Es dauert dann länger, bis die Spannung am integrierenden Kondensator C3 das Niveau des Ausgangs des Regelverstärkers CCL erreicht. Damit wird die Ein-Zeit verlängert, der elektronische Schalter S1 bleibt länger eingeschaltet womit der maximale Strom durch die Drossel L1 steigt. Somit kann der Ausgangsstrom eingestellt werden oder ein gewünschter zeitlicher Verlauf des Ausgangsstroms durchfahren werden.

Wird der Strom in der Drossel L1 zu Null, so kommt es am Knoten N1 kurzfristig zu parasitären Schwingungen. Diese werden durch den Detektor Det gefiltert auf den Eingang STOFF des Microcontrollers uC gegeben. Diesen Eingang prüft der Microcontroller uC auf Polaritätswechsel und erkennt somit den Zeitpunkt zu dem der Drosselstrom Null wird. Diese Funktion könnte auch durch ständiges Messen des Drosselstroms erreicht werden. Dies ist bei gleicher Geschwindigkeit allerdings aufwändiger. Sobald der Microcontroller am Eingang STOFF einen Stromnulldurchgang detektiert, beendet er die Aus-Zeit, schaltet S1 ein und startet den ON-Timer. Da der Drosselstrom bis auf Null absinkt arbeitet die getaktete Stromversorgung in diesem Fall im "Discontinuous Mode".

Falls die maximale Aus-Zeit abläuft, bevor der Drosselstrom auf Null absinkt, arbeitet die getaktete Stromversorgung in diesem Fall im "Continuous Mode".

Bei Microcontrollern können auch analoge Schaltkreise integriert sein. Daher können der Regelverstärker CCL oder die Duty-Cycle-Steuerung DCL oder jeweils Teile davon im Microcontroller integriert sein.

Andererseits können die Funktionen, die der Microcontroller ausführt auch durch separate Schaltungsteile ausgeführt werden. Beispielsweise kann die Auswertung des Istwerts am Eingang VS und die Ausgabe eines Sollwerts am Ausgang SG durch einen Schahltungsteil realisiert sein, während die Erzeugung eines PWM Signals mittels der Anschlüsse STON, STOFF und Gate durch einen weiteren Schaltungsteil realisiert sind.

Weiterhin kann es auch möglich sein, dass von einem Microcontroller mehrere Wandlerschaltungen geregelt werden. Beispielsweise können drei Buck-Wandler zur Energieversorgung von unterschiedlich farbigen Leuchtdioden durch einen gemeinsamen Microcotroller geregelt werden, falls er die dazu nötige Anzahl von Ein- und Ausgängen aufweist.

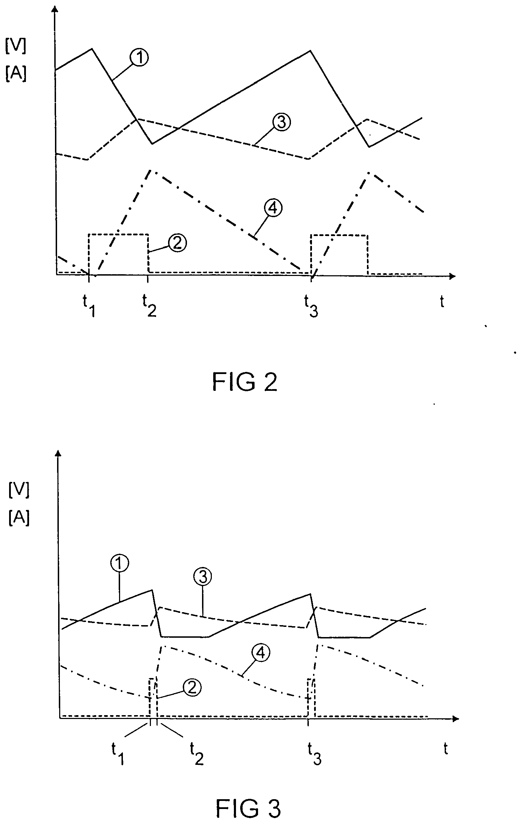

In Figur 2 sind typische Zeitverläufe von Strömen und Spannungen in einer erfindungsgemäßen Schaltungsanordnung im "Discontinuous Mode" dargestellt. Es zeigen: Kurve 1 die Spannung am Ausgang des Regelverstärkers CCL; Kurve 2 das Steuersignal für den elektronischen Schalter S1, Kurve 3 die Spannung am integrierenden Kondensator C3 und Kurve 4 den Drosselstrom durch L1.

Zum Zeitpunkt t1 wird S1 entsprechend dem Steuersignal eingeschaltet. Daraufhin steigt der Drosselstrom und die Spannung an C3. Kurve 1, die Spannung am Ausgang des Regelverstärkers CCL, fällt, wegen des invertierend arbeitenden Differenzverstärkers Amp. Zum Zeitpunkt t2 wird die Kurve 3 größer als die Kurve 1 worauf der Eingang STON des Microcontrollers uC eine negative Flanke erhält. Die Ein-Zeit wird beendet. Nach einer kurzen Verzögerung durch den Microcontroller uC schaltet entsprechend Kurve 2 der elektronische Schalter S1 ab. Drosselstrom und Spannung an C3 fallen wieder, während die Spannung am Ausgang des Regelverstärkers CCL wieder ansteigt. Zum Zeitpunkt t3 wird der Drosselstrom Null und der beschriebene Vorgang wiederholt sich.

In Figur 3 sind typische Zeitverläufe von Strömen und Spannungen in einer erfindungsgemäßen Schaltungsanordnung im "Continuous Mode" dargestellt. Die dargestellten Kurven zeigen die gleichen Signale wie in Figur 2. Der Unterschied zu Figur 2 besteht darin, dass der Drosselstrom noch nicht auf Null abgesunken ist und trotzdem der elektronische Schalter S1 zum Zeitpunkt t1 bzw. t3 wieder eingeschaltet wird, weil die maximale Aus-Zeit abgelaufen ist. Die Kurve 1 zeigt nach dem Zeitpunkt t2 Begrenzungseffekte, die für die Funktion der Schaltungsanordnung keine Bedeutung haben.

## Patentansprüche

1. Schaltungsanordnung zum Regeln einer getakteten Stromversorgung,
mit einer gewichteten Regelgröße und einem elektronischen Schalter (S1), der durch ein Steuersignal für die Dauer einer Ein-Zeit eingeschaltet und die Dauer einer Aus-Zeit ausgeschaltet ist,
**dadurch gekennzeichnet, dass**
die Schaltungsanordnung eine Steuereinheit (SE) umfasst,
die die Ein-Zeit beendet, falls das Zeitintegral des Steuersignals betragsmäßig größer wird, als die gewichtete Regelgröße.

2. Schaltungsanordnung nach Anspruch 1, **dadurch gekennzeichnet, dass** während der Ein-Zeit die gewichtete Regelgröße betragsmäßig kleiner wird.

3. Schaltungsanordnung nach Anspruch 1 oder 2, **dadurch gekennzeichnet, dass** die getakteten Stromversorgung eine Drossel (L1) enthält, wobei der Strom durch die Drossel (L1) die Regelgröße ist und ein Komparator (Comp) das Zeitintegral des Steuersignals mit der durch einen Regelverstärker (CCL) gewichteten Regelgröße vergleicht.

4. Schaltungsanordnung nach Anspruch 3, **dadurch gekennzeichnet, dass** der Regelverstärker (CCL) einen integrierenden Differenzverstärker (Amp) enthält, der die Differenz der Regelgröße mit einer Sollgröße bildet.

5. Schaltungsanordnung nach Anspruch 4, **dadurch gekennzeichnet, dass** die Steuereinheit einen Microcontroller (uC) enthält, der die Sollgröße bereit stellt.

6. Schaltungsanordnung nach Anspruch 5, **dadurch gekennzeichnet, dass** die Steuereinheit (SE) eine Ausgangsgröße der getakteten Stromversorgung erfasst und zur Festlegung einer Sollgröße auswertet.

7. Schaltungsanordnung nach einem der vorigen Ansprüche, **dadurch gekennzeichnet,**
**dass** die Steuereinheit am Ende der Ein-Zeit einen Off-Timer startet, der eine maximale Aus-Zeit vorgibt, in der der elektronische Schalter (S1) ausgeschaltet ist, wobei die Steuereinheit (SE) am Ende der Aus-Zeit den elektronischen Schalter (S1) einschaltet.

8. Schaltungsanordnung nach einem der vorigen Ansprüche, **dadurch gekennzeichnet,**
**dass** die Steuereinheit einen ON-Timer umfasst, der eine maximale Ein-Zeit vorgibt und bei erreichen der maximalen Ein-Zeit die Steuereinheit (SE) den elektronischen Schalter (S1) abschaltet.

9. Schaltungsanordnung nach Anspruch 7 oder 8 **dadurch gekennzeichnet, dass** der ON- und der OFF-Timer durch einen Microcontroller (uC) realisiert sind.

10. Schaltungsanordnung nach einem der vorigen Ansprüche, **dadurch gekennzeichnet, dass** die getaktete Stromversorgung eine Drossel (L1) enthält und einen Detektor (Det), der bei einem Stromnulldurchgang in der Drossel (L1) ein Signal an einen STOPP-OFF (STOFF) Eingang der Steuereinheit (SE) sendet,
wobei die Steuereinheit (SE) beim Empfang eines Signals am STOPP-OFF Eingang (STOFF), die Aus-Zeit beendet und den elektronischen Schalter (S1) einschaltet.

11. Schaltungsanordnung nach einem der vorigen Ansprüche, **dadurch gekennzeichnet, dass** es sich bei der getakteten Stromversorgung um einen Buck-Converter handelt.

12. Betriebsgerät zum Betreiben von Hochdruck-Entladungslampen **gekennzeichnet durch** eine Schaltungsanordnung gemäß einem der vorigen Ansprüche.

13. Getaktete Stromversorgung **gekennzeichnet durch** eine Schaltungsanordnung gemäß einem der vorigen Ansprüche.

14. Verfahren zum Regeln einer getakteten Stromversorgung mit einem elektronischen Schalter (S1) **gekennzeichnet durch** folgende Schritte:
• Einschalten des elektronischen Schalters (S1) mit einem Steuersignal und starten eines ON-Timers
• Bereitstellen des Zeitintegrals des Steuersignals
• Bereitstellen einer gewichteten Regelgröße
• Bereitstellen einer Differenzgröße gebildet aus der Differenz von Zeitintegral des Steuersignals und gewichteter Regelgröße
• Falls die Differenzgröße einen Schwellwert erreicht wird der ON-Timer rückgesetzt, der elektronische Schalter ausgeschaltet und ein OFF-Timer gestartet

15. Verfahren gemäß Anspruch 14 **dadurch gekennzeichnet, dass** die getaktete Stromversorgung eine Drossel (L1) umfasst und dann, wenn der Strom durch die Drossel (L1) einen vorgegebenen Grenzwert, beispielsweise Null, unterschreitet, der OFF-Timer rückgesetzt, der elektronische Schalter (S1) eingeschaltet und der ON-Timer gestartet wird.

16. Verfahren gemäß Anspruch 14 **dadurch gekennzeichnet, dass** der OFF-Timer rückgesetzt, der elektronische Schalter eingeschaltet und der ON-Timer gestartet wird, wenn der OFF-Timer eine vorbestimmte maximale Aus-Zeit erreicht.

17. Verfahren gemäß Anspruch 14 **dadurch gekennzeichnet, dass** der ON-Timer rückgesetzt, der elektronische Schalter ausgeschaltet und der OFF-Timer gestartet wird, wenn der ON-Timer eine vorbestimmte maximale Ein-Zeit erreicht.

## Claims

1. Circuit arrangement for controlling a pulsed power supply,
having a weighted controlled variable and an electronic switch (S1), which is switched on by means of a control signal for the duration of an On time and switched off for the duration of an Off time,
**characterized in that**
the circuit arrangement comprises a control unit (SE),
which ends the On time if the time integral of the control signal is higher in value than the weighted controlled variable.

2. Circuit arrangement according to Claim 1, **characterized in that** the weighted controlled variable is lower in value during the On time.

3. Circuit arrangement according to Claim 1 or 2, **characterized in that** the pulsed power supply contains an inductor (L1), the current through the inductor (L1) being the controlled variable, and a comparator (Comp) comparing the time integral of the control signal with the controlled variable weighted by a control amplifier (CCL).

4. Circuit arrangement according to Claim 3, **characterized in that** the control amplifier (CCL) contains an integrating differential amplifier (Amp) which forms the difference between the controlled variable and a desired variable.

5. Circuit arrangement according to Claim 4, **characterized in that** the control unit contains a microcontroller (uC) which provides the desired variable.

6. Circuit arrangement according to Claim 5, **characterized in that** the control unit (SE) detects an output variable of the pulsed power supply and evaluates it so as to establish a desired variable.

7. Circuit arrangement according to one of the preceding claims, **characterized in that** the control unit starts an Off timer at the end of the On time, and this Off timer predetermines a maximum Off time in which the electronic switch (S1) is switched off, the control unit (SE) switching the electronic switch (S1) on at the end of the Off time.

8. Circuit arrangement according to one of the preceding claims, **characterized in that** the control unit comprises an On timer, which predetermines a maximum On time, and the control unit (SE) switches the electronic switch (S1) off when the maximum On time is reached.

9. Circuit arrangement according to Claim 7 or 8, **characterized in that** the On timer and the Off timer are implemented by a microcontroller (uC).

10. Circuit arrangement according to one of the preceding claims, **characterized in that** the pulsed power supply contains an inductor (L1) and a detector (Det) which transmits a signal to a STOP-OFF (ST OFF) input of the control unit (SE) in the event of a current zero crossing in the inductor (L1), the control unit (SE) ending the Off time and switching the electronic switch (S1) on when a signal is received at the STOP-OFF input (ST OFF).

11. Circuit arrangement according to one of the preceding claims, **characterized in that** the pulsed power supply is a buck converter.

12. Operating device for operating high-pressure discharge lamps, **characterized by** a circuit arrangement according to one of the preceding claims.

13. Pulsed power supply, **characterized by** a circuit arrangement according to one of the preceding claims.

14. Method for controlling a pulsed power supply having an electronic switch (S1), **characterized by** the following steps:
• switching the electronic switch (S1) on with a control signal and starting the On timer
• provision of the time integral of the control signal
• provision of a weighted controlled variable
• provision of a differential variable formed from the difference between the time integral of the control signal and the weighted controlled variable
• if the differential variable reaches a threshold value, the On timer is reset, the electronic switch is switched off and an Off timer is started.

15. Method according to Claim 14, **characterized in that** the pulsed power supply comprises an inductor (L1) and, when the current through the inductor (L1) falls below a predetermined limit value, for example zero, the Off timer is reset, the electronic switch (S1) is switched on and the On timer is started.

16. Method according to Claim 14, **characterized in that** the Off timer is reset, the electronic switch is switched on and the On timer is started if the Off timer reaches a predetermined maximum Off time.

17. Method according to Claim 14, **characterized in that** the On timer is reset, the electronic switch is switched off and the Off timer is started if the On timer reaches a predetermined maximum On time.

## Revendications

1. Configuration de circuit pour la régulation d'une alimentation électrique cadencée, comprenant une grandeur de régulation pondérée et un commutateur électronique (S1), qui est activé par un signal de commande pendant la durée d'une période d'activation et qui est désactivé pendant la durée d'une période de désactivation,
**caractérisée en ce que**
la configuration de circuit comprend une unité de commande (SE),
qui termine la période d'activation si l'intégrale du signal de commande en fonction du temps présente une valeur supérieure à la grandeur de régulation pondérée.

2. Configuration de circuit selon la revendication 1, **caractérisée en ce que**, pendant la période d'activation, la grandeur de régulation pondérée présente une valeur inférieure.

3. Configuration de circuit selon la revendication 1 ou 2, **caractérisée en ce que** l'alimentation électrique cadencée contient une inductance (L1), le courant à travers l'inductance (L1) étant la grandeur de régulation et un comparateur (Comp) comparant l'intégrale du signal de commande en fonction du temps avec la grandeur de régulation pondérée par un amplificateur de régulation (CCL).

4. Configuration de circuit selon la revendication 3, **caractérisée en ce que** l'amplificateur de régulation (CCL) contient un amplificateur différentiel intégré (Amp), qui forme la différence entre la grandeur de régulation et une grandeur de consigne.

5. Configuration de circuit selon la revendication 4, **caractérisée en ce que** l'unité de commande contient un micro-contrôleur (uC) qui met la grandeur de consigne à disposition.

6. Configuration de circuit selon la revendication 5, **caractérisée en ce que** l'unité de commande (SE) mesure une grandeur de sortie de l'alimentation électrique cadencée et l'analyse pour la détermination d'une grandeur de consigne.

7. Configuration de circuit selon l'une des revendications précédentes, **caractérisée en ce que** l'unité de commande démarre à la fin de la période d'activation un minuteur d'arrêt qui prédétermine une période de désactivation maximale pendant laquelle le commutateur électronique (S1) est désactivé, l'unité de commande (SE) activant le commutateur électronique (S1) à la fin de la période de désactivation.

8. Configuration de circuit selon l'une des revendications précédentes, **caractérisée en ce que** l'unité de commande comprend un minuteur d'activation qui prédétermine une période d'activation maximale et qui arrête le commutateur électronique (S1) lorsque la période d'activation maximale est écoulée.

9. Configuration de circuit selon la revendication 7 ou 8, **caractérisée en ce que** le minuteur d'activation et le minuteur d'arrêt sont réalisés par un micro-contrôleur (uC).

10. Configuration de circuit selon l'une des revendications précédentes, **caractérisée en ce que** l'alimentation électrique cadencée contient une inductance (L1) et un détecteur (Det) qui, lors d'un passage par un courant nul dans l'inductance (L1), envoie un signal à une entrée STOP-OFF (STOFF) de l'unité de commande (SE), l'unité de commande (SE) terminant, lors de la réception d'un signal à l'entrée STOP-OFF (STOFF), la période d'activation et activant le commutateur électronique (S1).

11. Configuration de circuit selon l'une des revendications précédentes, **caractérisée en ce que** l'alimentation électrique cadencée est un convertisseur abaisseur.

12. Appareil de commande pour la commande de lampes à décharge à haute pression, **caractérisé par** une configuration de circuit selon l'une des revendications précédentes.

13. Alimentation électrique cadencée **caractérisée par** une configuration de circuit selon l'une des revendications précédentes.

14. Procédé de régulation d'une alimentation électrique cadencée avec un commutateur électronique (S1), **caractérisé par** les étapes suivantes :
• activation du commutateur électronique (S1) avec un signal de commande et démarrage d'un minuteur d'activation,
• mise à disposition de l'intégrale du signal de commande en fonction du temps,
• mise à disposition d'une grandeur de régulation pondérée,
• mise à disposition d'une grandeur différentielle à partir de la différence entre l'intégrale du signal de commande en fonction du temps et la grandeur de régulation pondérée,
• si la grandeur différentielle atteint une valeur seuil, le minuteur d'activation est réinitialisé, le commutateur électronique est désactivé et un minuteur d'arrêt est démarré.

15. Procédé selon la revendication 14, **caractérisé en ce que** l'alimentation électrique cadencée comprend une inductance (L1) et, lorsque le courant à travers l'inductance (L1) passe en dessous d'une valeur seuil prédéterminée, par exemple zéro, le minuteur d'arrêt est réinitialisé, le commutateur électronique (S1) est activé et le minuteur d'activation est démarré.

16. Procédé selon la revendication 14, **caractérisé en ce que** le minuteur d'arrêt est réinitialisé, le commutateur électronique est activé et le minuteur d'activation est démarré lorsque le minuteur d'arrêt atteint une période de désactivation maximale prédéterminée.

17. Procédé selon la revendication 14, **caractérisé en ce que** le minuteur d'activation est réinitialisé, le commutateur électronique est désactivé et le minuteur d'arrêt est démarré lorsque le minuteur d'activation atteint une période d'activation maximale prédéterminée.
